**Europäisches Patentamt**

**European Patent Office**

**Office européen des brevets**

(19)

(11) Veröffentlichungsnummer: **0 016 394**
**B1**

(12) # EUROPÄISCHE PATENTSCHRIFT

(45) Veröffentlichungstag der Patentschrift:
**12.01.83**

(21) Anmeldenummer: **80101215.4**

(22) Anmeldetag: **10.03.80**

(51) Int. Cl.³: **G 21 F 9/16,** B 29 F 3/01,
B 01 F 7/08

(54) Mehrwellige Schneckenmaschine.

(30) Priorität: **21.03.79 DE 2911141**

(43) Veröffentlichungstag der Anmeldung:
**01.10.80 Patentblatt 80/20**

(45) Bekanntmachung des Hinweises auf die Patenterteilung:
**12.01.83 Patentblatt 83/2**

(84) Benannte Vertragsstaaten:
**CH FR**

(56) Entgegenhaltungen:
**CH-A-329 700**
**CH-A-416 292**
**DE-A-2 548 251**
**FR-A-2 165 352**
**FR-A-2 222 844**
**US-A-1 937 385**

(73) Patentinhaber: **KRAFTWERK UNION AKTIENGESELLSCHAFT, Wiesenstrasse 35, D-4330 Mülheim (Ruhr) (DE)**

(72) Erfinder: **Puthawala, Anwer, Dipl.-Ing., Weiselstrasse 46, D-8520 Erlangen-Buckenhof (DE)**
Erfinder: **Hoffmann, Lutz, Am Europakanal 38, D-8520 Erlangen (DE)**
Erfinder: **Meintker, Manfred, Dipl.-Ing., Am Europakanal 14, D-8520 Erlangen (DE)**

(74) Vertreter: **Mehl, Ernst, Dipl.-Ing., Postfach 22 01 76, D-8000 München 22 (DE)**

## Mehrwellige Schneckenmaschine

Die Erfindung betrifft eine mehrwellige Schneckenmaschine zur Einbettung von radioaktiven Abfallstoffen in thermoplastisches Material, insbesondere Bitumen, Kunststoff oder dergleichen, mit einer Auslassöffnung. Der Auslass einer derartigen Maschine ist in der schematischen Darstellung der US-A-3 971 732 als gekrümmtes Rohr gleichen Querschnitts gezeichnet.

Aufgabe der Erfindung ist eine Verbesserung solcher Schneckenmaschinen, weil es sich gezeigt hat, dass die Austragsöffnung zum Verkleben neigt. Ausserdem soll vermieden werden, dass die Umgebung beim Arbeiten der Schneckenmaschine verschmutzt wird, weil solche Verschmutzungen wegen der eingebetteten radioaktiven Abfallstoffe nur schwer, insbesondere durch Fernbedienung, beseitigt werden können.

Gemäss der Erfindung ist die Auslassöffnung mit einem sich in Austragsrichtung verengenden Trichter versehen. Erstaunlicherweise hat sich nämlich gezeigt, dass man das Verstopfen der Auslassöffnung nicht etwa durch eine Erweiterung der Auslassöffnung sondern besser durch eine Verengung beheben kann, die das aus den einzelnen Schnecken austretende Material zusammenfasst. Durch das Zusammenfassen wird vermieden, dass relativ dünne Fäden entstehen, die sich durch Abkühlung schnell verfestigen und damit die Auslassöffnung verstopfen oder aber in kurzen Stücken abreissen und wegen ihres geringen Gewichts von einem der Auslassöffnung zugeordneten Behälter weggetragen werden.

Vorzugsweise verengt sich der Trichter auf die Hälfte des grössten Querschnitts. Dabei kann er mit einem rechteckigen Querschnitt gleichbleibender Höhe ausgeführt werden, so dass er für eine Reinigung geeigneten Mindestabmessungen nicht unterschreitet.

Bei einer in der Praxis bewährten Ausführungsform weist der Trichter eine sich in Austragsrichtung verjüngende einseitige Spitze auf. An dieser Spitze wird das herabrinnende Material, überwiegend also Bitumen, auch fein geführt, wenn die auslaufende Menge, zum Beispiel beim Abschalten der Maschine, gering ist, so dass seitwärts fallende Tropfen vermieden sind, die die Umgebung zu verschmutzen drohen.

Der Trichter kann vorteilhaft ein mit einem Flansch lösbar befestigter Bauteil sein. Dies erleichtert nicht nur die Herstellung, sondern ergibt auch die Möglichkeit, den Trichter für sich zu lösen und dann gründlich zu reinigen.

Zur näheren Erläuterung der Erfindung wird anhand der beiliegenden Zeichnung ein Ausführungsbeispiel beschrieben. Dabei zeigt die Fig. 1 die erfindungsgemässe Schneckenmaschine als Ganzes, während in den Fig. 2 und 3 in zwei zueinander senkrechten Ansichten der erfindungsgemässe Trichter in wesentlich grösserem Massstab gezeichnet ist.

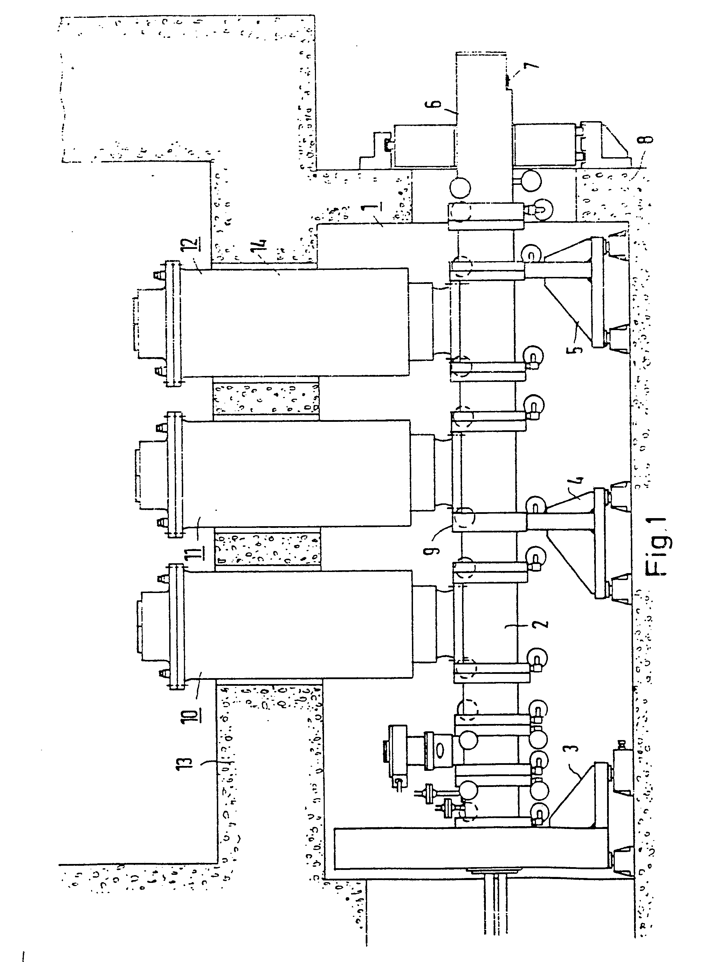

Die in Fig. 1 gezeichnete Schneckenmaschine 1 dient zum Einbetten von schwach bis mittelaktivem Abfall aus der Kühlwasseraufbereitung eines Druckwasser-Leistungsreaktors in Bitumen, das zur Endlagerung des radioaktiven Abfalls in Fässer eingefüllt wird. Die Schneckenmaschine 1 besitzt ein aus mehreren Teilen zusammengeflanschtes Gehäuse 2, das auf Stützen 3, 4 und 5 ruht. An der in Fig. 1 rechten Seite ist bei 6 ein Auslass 7 vorgesehen. Dort werden nicht weiter dargestellte Fässer für die Aufnahme der Abfall-Bitumen-Mischung bereitgestellt. Die ganze Maschine 1 ist in ein Betonbauwerk 8 zur Strahlenabschirmung eingesetzt.

An der Oberseite 9 der Maschine 1 sind drei Dampfdome 10, 11 und 12 vorgesehen, die gleich ausgebildet sind und durch den Teil 13 der Betonwand 8 ragen. Die Dampfdome 10, 11 und 12 sind mit Kondensatoren 14 kombiniert.

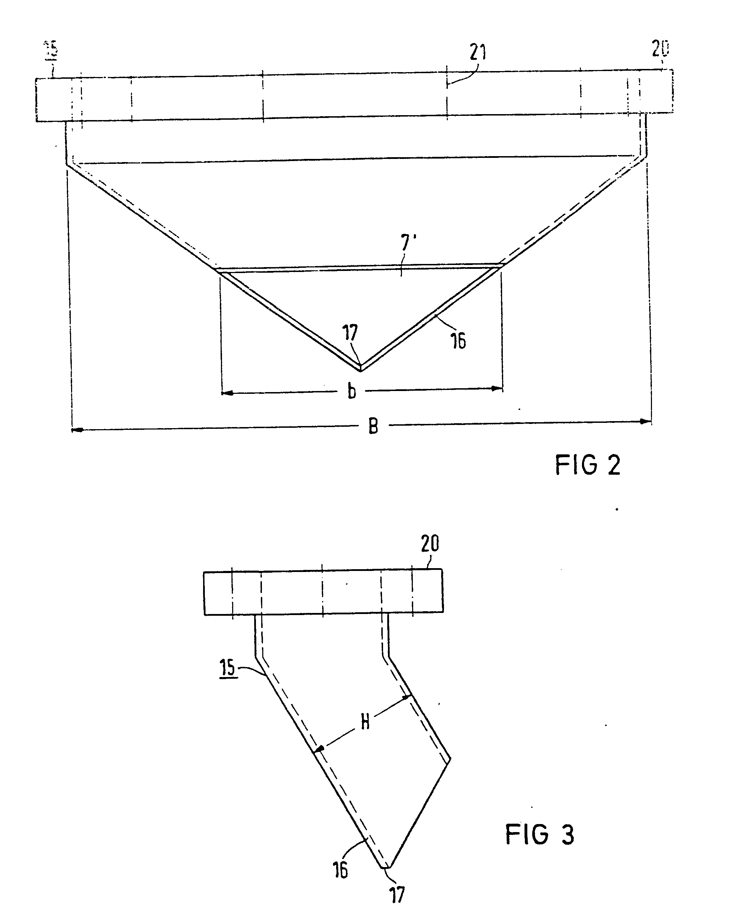

Der Auslass 7 ist mit einem lösbaren Trichter 15 versehen, der einen rechteckigen Querschnitt hat (Fig. 2 und 3). Seine Höhe H von 25 mm bleibt über die gesamte Länge gleich. Degegen verringert sich die Breite von dem grössten Wert B von 135 mm auf den kleinsten Wert b, der mit 65 mm nur etwa halb so gross ist. Auf diese Weise ist auch der Querschnitt praktisch halbiert. Die damit gebildete Auslassöffnung 7' ist mit einem Blech 16 im Verlauf der unteren Breitenwand einseitig verlängert, das sich bis zu der Spitze 17 verengt. Mit dem Blech 16 werden auch einzelne herabrinnende Tropfen bis zu einem bestimmten Punkt genau geführt.

Der Trichter 15 ist mit einem Flansch 20 lösbar an dem Gehäuse 2 zu befestigen. Zu diesem Zweck dienen die durch Mittellinien angedeuteten Schrauben 21, die durch entsprechende Bohrungen im Flansch 20 verlaufen.

### Patentansprüche

1. Mehrwellige Schneckenmaschine zur Einbettung von radioaktiven Abfallstoffen in thermoplastisches Material, insbesondere Bitumen, Kunststoff oder dergleichen, mit einer Auslassöffnung, dadurch gekennzeichnet, dass die Auslassöffnung (7) mit einem sich in Austragsrichtung verengenden Trichter (15) versehen ist.

2. Schneckenmaschine nach Anspruch 1, dadurch gekennzeichnet, dass sich der Trichter (15) auf die Hälfte des grössten Querschnitts verengt.

3. Schneckenmaschine nach Anspruch 1 oder 2, dadurch gekennzeichnet, dass der Trichter (15) einen rechteckigen Querschnitt mit gleichbleibender Höhe hat.

4. Schneckenmaschine nach Anspruch 1, 2 oder 3, dadurch gekennzeichnet, dass der Trichter (15) eine sich in Austragsrichtung verjüngende einseitige Spitze (17) aufweist.

5. Schneckenmaschine nach einem der Ansprüche 1 bis 4, dadurch gekennzeichnet, dass der Trichter (15) ein mit einem Flansch (20) lösbar befestigter Bauteil ist.

## Claims

1. A multi-shaft worm machine for embedding radioactive waste products in thermoplastic material, in particular bitumen, synthetic resin or the like, and having an outlet orifice, characterised in that the outlet orifice (7) is provided with a funnel (15) narrowing in the discharge direction.

2. A worm machine as claimed in Claim 1, characterised in that the funnel (15) narrows to half of its largest cross-section.

3. A worm machine as claimed in Claim 1 or Claim 2, characterised in that the funnel (15) has a rectangular cross-section of constant height.

4. A worm machine as claimed in Claim 1, Claim 2 or Claim 3, characterised in that the funnel (15) has a one-sided tip (17) tapering in the direction of discharge.

5. A worm machine as claimed in one of Claims 1 to 4, characterised in that the funnel (15) is a component which is detachably secured by means of a flange (20).

## Revendications

1. Machine à vis sans fin à arbres multiples pour l'enrobage de déchets radioactifs dans un matériau thermoplastique, notamment dans du bitume, une matière plastique ou autres matières semblables, ayant une ouverture de sortie, caractérisée en ce que l'ouverture (7) de sortie est munie d'un entonnoir (15) se rétrécissant dans le sens du déchargement.

2. Machine à vis sans fin suivant la revendication 1, caractérisée en ce que l'entonnoir (15) se rétrécit jusqu'à présenter une section droite égale à la moitié de la plus grande section droite.

3. Machine à vis sans fin suivant la revendication 1 ou 2, caractérisée en ce que l'entonnoir (15) a une section droite rectangulaire ayant une hauteur constante.

4. Machine à vis sans fin suivant la revendication 1, 2 ou 3, caractérisée en ce que l'entonnoir (15) présente une pointe (17) d'un côté s'effilant dans le sens de déchargement.

5. Machine à vis sans fin suivant l'une des revendications 1 à 4, caractérisée en ce que l'entonnoir (15) est un élément fixé de manière amovible par une bride (20).

Fig.1

FIG 2

FIG 3